(19) Europäisches Patentamt
European Patent Office
Office européen des brevets

(11) EP 4 359 225 B1

(12) # FASCICULE DE BREVET EUROPEEN

(45) Date de publication et mention de la délivrance du brevet:
**06.08.2025 Bulletin 2025/32**

(21) Numéro de dépôt: **22744243.1**

(22) Date de dépôt: **16.06.2022**

(51) Classification Internationale des Brevets (IPC):
***B60C 1/00*** *(2006.01)* ***C08K 3/04*** *(2006.01)*
***C08K 5/315*** *(2006.01)* ***C08K 5/3445*** *(2006.01)*

(52) Classification Coopérative des Brevets (CPC):
(C-Sets disponibles)
**B60C 1/0016; C08K 3/04; C08K 5/3445** (Cont.)

(86) Numéro de dépôt international:
**PCT/FR2022/051166**

(87) Numéro de publication internationale:
**WO 2022/269170 (29.12.2022 Gazette 2022/52)**

(54) **COMPOSITION DE CAOUTCHOUC PRESENTANT UNE RESISTANCE AUX AGRESSIONS AMELIOREE**

KAUTSCHUKZUSAMMENSETZUNG MIT VERBESSERTER BESTÄNDIGKEIT GEGEN AGGRESSIVE WIRKUNGEN

RUBBER COMPOSITION WITH IMPROVED RESISTANCE TO AGGRESSIVE EFFECTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.06.2021 FR 2106812**

(43) Date de publication de la demande:
**01.05.2024 Bulletin 2024/18**

(73) Titulaire: **COMPAGNIE GENERALE DES ETABLISSEMENTS MICHELIN**
**63000 Clermont-Ferrand (FR)**

(72) Inventeurs:
- **FERRAND, Thomas**
  **63040 CLERMONT-FERRAND Cedex 9 (FR)**
- **WAECKERLE, Nicolas**
  **63040 CLERMONT-FERRAND Cedex 9 (FR)**
- **LIBERT, Romain**
  **63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**EP-A1- 3 060 413** **EP-B1- 3 060 413**
**WO-A1-2019/122546** **WO-A1-2020/074806**
**WO-A1-2020/094993**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



(Cont. page suivante)

(52) Classification Coopérative des Brevets (CPC):
(Cont.)

C-Sets
**C08K 3/04, C08L 23/083;**
**C08K 5/3445, C08L 23/083**

## Description

La présente invention est relative à des compositions de caoutchouc présentant une résistance aux agressions mécaniques améliorée. Elle s'intéresse particulièrement à des articles en caoutchouc tels que des bandages pneumatiques, des bandages non pneumatiques, des chenilles, des bandes transporteuses ou tout autre article de caoutchouc dont la performance précitée serait intéressante.

En particulier, les compositions de caoutchouc de l'invention sont très intéressantes lorsqu'elles sont utilisées dans des bandes de roulement de bandage pneumatique pour véhicule de génie civil. En effet, ces bandages doivent posséder des caractéristiques techniques très différentes des bandages destinés à des véhicules roulant exclusivement sur route (c'est-à-dire un sol bitumeux), car la nature des sols hors la route sur lesquels ils évoluent principalement est très différente, et notamment beaucoup plus agressive, de par sa nature caillouteuse. Par ailleurs, contrairement à des bandages pour véhicules de tourisme par exemple, les bandages pour les gros engins de génie civil doivent pouvoir supporter des charges qui peuvent être extrêmement lourdes. Par conséquent, les solutions connues pour les bandages roulant sur sol bitumeux ne sont pas directement applicables à des bandages hors la route tels que des bandages pour véhicules de génie civil.

Au cours du roulage, une bande de roulement subit des sollicitations mécaniques et des agressions résultant du contact direct avec le sol. Dans le cas d'un bandage monté sur un véhicule portant de lourdes charges, les sollicitations mécaniques et les agressions subies par le bandage se trouvent amplifiées sous l'effet du poids qu'il supporte. Les bandages pour véhicules miniers en particulier sont soumis à des sollicitations fortes, à la fois au niveau local : roulage sur les macro-indenteurs représentés par les cailloux qui constituent les pistes (roche concassée), et au niveau global : passage de couple important car les pentes des pistes pour entrer ou sortir des « pits », ou mines à ciel ouvert, sont de l'ordre de 10%, et sollicitations fortes des pneus lors des demi-tours des véhicules pour les manœuvres de chargement et déchargement.

Ceci a pour conséquence que les amorces de fissure qui se créent dans la bande de roulement du bandage sous l'effet de ces sollicitations et de ces agressions, ont tendance à se propager davantage en surface ou à l'intérieur de la bande de roulement, pouvant provoquer des arrachements localisés ou généralisés de la bande de roulement. Ces sollicitations peuvent donc entraîner un endommagement de la bande de roulement et donc réduire la durée de vie de la bande de roulement, et donc du bandage.

Ceci est particulièrement vrai pour les bandages équipant les véhicules de génie civil qui évoluent généralement dans des mines ou des carrières. Ceci est également vrai pour les chenilles en caoutchouc ou les bandages de tout type de véhicules susceptibles de porter de lourdes charges et se mouvant sur des sols caillouteux, tels que les véhicules agricoles, de chantier, etc. Le problème de résistance aux agressions mécaniques intéresse également les bandes transporteuses (ou convoyeur à bande) qui peuvent réceptionner de grosses quantités de terre, minerai, cailloux, roches.

Il est donc important de disposer de composition de caoutchouc présentant une résistance aux agressions mécaniques. Pour résoudre ce problème, il est connu de l'homme de l'art, que par exemple, le caoutchouc naturel permet d'obtenir des propriétés de résistance à la propagation de fissures élevées.

Ainsi, les manufacturiers cherchent toujours des solutions pour améliorer la résistance aux agressions mécaniques de composition de caoutchouc. De préférence, ces solutions ne doivent pas ou peu pénaliser les propriétés limites (contrainte et allongement rupture) afin d'être en capacité d'absorber les chocs ou obstacles sans rompre.

Poursuivant ses recherches, la Demanderesse a découvert de façon inattendue que l'utilisation combinée d'un copolymère contenant des unités éthylène et des unités 1,3-diène, les unités éthylène dans le copolymère représentant plus de 50% en mole des unités monomères du copolymère, d'un composé 1,3-dipolaire spécifique combiné avec une fraction volumique de charge importante permet d'améliorer la résistance aux agressions mécaniques, dans des compositions comprenant majoritairement du noir de carbone à titre de charge renforçante.

Ainsi, l'invention a pour objet une composition de caoutchouc à base d'au moins :

- une matrice élastomère comprenant plus de 50 pce d'un copolymère contenant des unités éthylène et des unités 1,3-diène, les unités éthylène dans le copolymère représentant plus de 50% en mole des unités monomères du copolymère,
- un composé 1,3-dipolaire répondant à la formule (I)

**Q-Sp-B** (I)

dans laquelle :

  - ◦ Q comprend un dipôle contenant au moins et de préférence un atome d'azote,
  - ◦ Sp, de préférence divalent, est un atome ou un groupe d'atomes reliant Q à B,
  - ◦ B comprend un cycle imidazole répondant à la formule (II) suivante

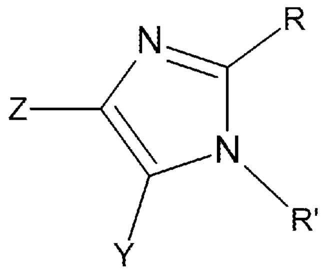

(II)

dans laquelle :

- 3 des 4 symboles Z, Y, R et R', identiques ou différents, représentent chacun un atome ou un groupe d'atomes, Z et Y pouvant former ensemble avec les atomes de carbone auxquels ils se rattachent un cycle,
- et le quatrième symbole Z, Y, R ou R' désigne un rattachement direct à Sp,

- une charge renforçante comprenant du noir de carbone, le noir de carbone représentant plus de 50% en poids de la charge renforçante, la fraction volumique de charge dans la composition de caoutchouc étant supérieure à 18%,
- un système de réticulation.

La présente invention a également pour objet des articles en caoutchouc comprenant une composition selon l'invention, en particulier une bande de roulement de bandage pneumatique ou non-pneumatique.

**I- DÉFINITIONS**

Par l'expression "composition à base de", il faut entendre une composition comportant le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression "partie en poids pour cent parties en poids d'élastomère" (ou pce), il faut entendre au sens de la présente invention, la partie, en masse pour cent parties en masse d'élastomère.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. Au contraire, un composé "minoritaire" est un composé qui ne représente pas la fraction massique la plus grande parmi les composés du même type. De préférence par majoritaire, on entend présent à plus de 50%, de préférence plus de 60%, 70%, 80%, 90%, et plus préférentiellement le composé « majoritaire » représente 100%.

Dans la présente demande, on entend par « l'ensemble des unités monomères du copolymère » ou « la totalité des unités monomères du copolymère » tous les motifs de répétitions constitutifs du copolymère qui résultent de l'insertion des monomères dans la chaîne élastomère par polymérisation. Sauf indication contraire, les teneurs en une unité monomère ou motif de répétition dans le copolymère contenant des unités éthylène et des unités 1,3-diène sont données en pourcentage molaire calculé sur la base de l'ensemble des unités monomères du copolymère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou

encore obtenus à partir de matières premières elles-mêmes issues d'un procédé de recyclage. Sont concernés notamment les polymères, les plastifiants, les charges, etc.

Toutes les valeurs de température de transition vitreuse « Tg » décrite dans la présente sont mesurées de manière connue par DSC (Differential Scanning Calorimetry) selon la norme ASTM D3418 (1999).

## II- DESCRIPTION DE L'INVENTION

II-1 Matrice élastomère

La composition du pneumatique selon l'invention a comme caractéristique essentielle de comprendre une matrice élastomère comprenant plus de 50 pce d'un copolymère contenant des unités éthylène et des unités 1,3-diène, les unités éthylène dans le copolymère représentant plus de 50% en mole des unités monomères du copolymère.

Dans la présente, le « copolymère contenant des unités éthylène et des unités 1,3-diène, les unités éthylène dans le copolymère représentant plus de 50% en mole des unités monomères du copolymère » pourra être désigné par « le copolymère » ou par « le copolymère contenant des unités éthylène et des unités 1,3-diène » pour un souci de simplification de rédaction.

Par « matrice élastomère », on entend l'ensemble des élastomères de la composition.

Par « copolymère contenant des unités éthylène et des unités 1,3-diène », on entend tout copolymère comprenant, au sein de sa structure, au moins des unités éthylène et des unités ,3-diène. Le copolymère peut ainsi comprendre des unités monomères différentes des unités éthylène et des unités ,3-diène. Par exemple, le copolymère peut comprendre également des unités alpha-oléfine, notamment des unités alpha-oléfine ayant de 3 à 18 atomes de carbone, avantageusement ayant de 3 à 6 atomes de carbone. Par exemple, les unités alpha-oléfine peuvent être choisies dans le groupe constitué par le propylène, le butène, le pentène, l'hexène ou leurs mélanges.

De manière connue, l'expression « unité éthylène » fait référence au motif $-(CH_2-CH_2)-$résultant de l'insertion de l'éthylène dans la chaîne élastomère.

De manière connue, l'expression « unité 1,3-diène » fait référence aux unités résultant de l'insertion du 1,3-diène par une addition 1,4, une addition 1,2 ou une addition 3,4 dans le cas de l'isoprène. Les unités 1,3-diène sont celles par exemple d'un 1,3-diène ou d'un mélange de 1,3-diènes, le ou les 1,3-diènes ayant de 4 à 12 atomes de carbone, tels que tout particulièrement le 1,3-butadiène et l'isoprène. De préférence, le 1,3-diène est le 1,3-butadiène.

Avantageusement, les unités éthylène dans le copolymère représentent entre 50% et 95%, de préférence entre 55% et 90%, en mole des unités monomères du copolymère.

Avantageusement, le copolymère contenant des unités éthylène et des unités 1,3-diène est un copolymère d'éthylène et de 1,3-diène, c'est-à-dire que le copolymère ne contient pas d'unités autres que l'éthylène et le 1,3-diène.

Lorsque le copolymère est un copolymère d'éthylène et d'un 1,3-diène, celui-ci contient avantageusement des unités de formule (III) et/ou (IV). La présence de motif cyclique saturé à 6 membres, 1,2-cyclohexanediyle, de formule (III) comme unité monomère dans le copolymère peut résulter d'une série d'insertions très particulières de l'éthylène et du 1,3-butadiène dans la chaîne polymère au cours de sa croissance.

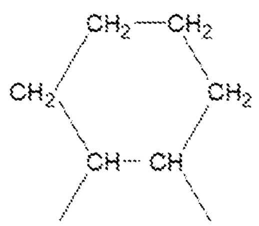

(III)

$$-CH_2-CH(CH=CH_2)- \qquad (IV)$$

Par exemple, le copolymère d'éthylène et d'un 1,3-diène peut être dépourvu d'unités de formule (III). Dans ce cas, il contient de préférence des unités de formule (IV).

Lorsque le copolymère d'éthylène et d'un 1,3-diène comprend des unités de formule (III) ou des unités de formule (IV) ou encore des unités de formule (III) et des unités de formule (IV), les pourcentages molaires des unités de formule (III) et des unités de formule (IV) dans le copolymère, respectivement o et p, satisfont de préférence à l'équation suivante (eq. 1), de manière plus préférentielle à l'équation (eq. 2), o et p étant calculés sur la base de l'ensemble des unités monomères du copolymère.

$$0 < o+p \leq 25 \qquad (eq. 1)$$

$$0 < o+p < 20 \qquad (eq. 2)$$

Selon l'invention, le copolymère, de préférence le copolymère d'éthylène et d'un 1,3-diène (de préférence de 1,3-butadiène), est un copolymère statistique.

Avantageusement, la masse moyenne en nombre (Mn) du copolymère, de préférence du copolymère d'éthylène et d'un 1,3-diène (de préférence de 1,3-butadiène) est comprise dans un domaine allant de 100 000 à 300 000 g/mol, de préférence de 150 000 à 250 000 g/mol.

La Mn du copolymère est déterminée de manière connue, par chromatographie d'exclusion stérique (SEC) telle que décrite ci-dessous :

La technique SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier. Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE. Il n'y a pas de traitement particulier de l'échantillon de polymère avant analyse. Celui-ci est simplement solubilisé dans le solvant d'élution à une concentration d'environ 1 $g.L^{-1}$. Puis la solution est filtrée sur filtre de porosité 0,45$\mu$m avant injection. L'appareillage utilisé est une chaîne chromatographique "WATERS Acquity" ou "WATERS Alliance". Le solvant d'élution est le tétrahydrofurane avec antioxydant de type BHT (hydroxytoluène butylé) de 250 ppm, le débit est de 1 $mL.min^{-1}$, la température des colonnes est de 35° C et la durée d'analyse de 40 min. Les colonnes utilisées sont un jeu de trois colonnes Agilent de dénomination commerciale "InfinityLab PolyPore". Le volume injecté de la solution de l'échantillon est 100 $\mu$L. Le détecteur est un réfractomètre différentiel "réfractomètre Acquity" ou "WATERS 2410" et le logiciel d'exploitation des données chromatographiques est le système "WATERS EMPOWER". Les masses molaires moyennes calculées sont relatives à une courbe d'étalonnage réalisée à partir de polystyrènes étalon.

Le copolymère peut être obtenu selon différentes méthodes de synthèse connues de l'homme du métier, notamment en fonction de la microstructure visée du copolymère. Généralement, il peut être préparé par copolymérisation au moins d'un 1,3-diène, de préférence le 1,3-butadiène, et d'éthylène et selon des méthodes de synthèse connues, en particulier en présence d'un système catalytique comprenant un complexe métallocène. On peut citer à ce titre les systèmes catalytiques à base de complexes métallocènes, lesquels systèmes catalytiques sont décrits dans les documents EP 1 092 731, WO 2004035639, WO 2007054223 et WO 2007054224 au nom de la Demanderesse. Le copolymère, y compris lorsqu'il est statistique, peut être préparé aussi par un procédé utilisant un système catalytique de type préformé comme ceux décrits dans les documents WO 2017093654 A1, WO 2018020122 A1 et WO 2018020123 A1.

Le copolymère peut être constitué d'un mélange de copolymères contenant des unités éthylène et des unités diéniques qui se différencient des uns des autres par leurs microstructures et/ou par leurs macrostructures.

Avantageusement, le taux du copolymère contenant des unités éthylène et des unités 1,3-diène dans la composition est compris dans un domaine allant de 60 à 100 pce, de préférence de 80 à 100 pce.

La matrice élastomère peut avantageusement comprendre uniquement, à titre d'élastomère, le copolymère contenant des unités éthylène et des unités 1,3-diène.

Alternativement, la matrice élastomère peut comprendre en outre un élastomère diénique différent du copolymère contenant des unités éthylène et des unités 1,3-diène (également appelé dans la présente « l'autre élastomère »). L'autre élastomère, lorsqu'il est présent, est minoritaire, c'est-à-dire qu'il représente moins 50%, 40%, 30%, 20%, voire moins de 10% en poids de la matrice élastomère. Par exemple, le taux de l'autre élastomère, dans la composition, peut être compris dans un domaine allant de 0 à 40 pce, de préférence de 0 à 20 pce.

L'autre élastomère de la matrice élastomère du pneumatique selon l'invention est choisi préférentiellement dans le groupe des élastomères diéniques fortement insaturés tels que les polybutadiènes (en abrégé "BR"), les polyisoprènes (IR) de synthèse, le caoutchouc naturel (NR), les copolymères de butadiène, les copolymères d'isoprène et les mélanges de ces élastomères. On entend en général par "élastomère diénique fortement insaturé", un élastomère diénique issu au moins en partie de monomères diènes conjugués, ayant un taux de motifs ou unités d'origine diénique (diènes conjugués) qui est supérieur à 50% (% en moles).

II-2 Composé 1, 3-dipolaire

La composition de caoutchouc conforme à l'invention comprend un composé 1,3-dipolaire. Le terme composé 1,3-dipolaire est compris selon la définition donnée par IUPAC.

Le composé 1,3-dipolaire répond à la formule (I) :

**Q-Sp-B** (I)

dans laquelle :

- Q comprend un dipôle contenant au moins et de préférence un atome d'azote,
- Sp, de préférence divalent, est un atome ou un groupe d'atomes reliant Q à B,
- B comprend un cycle imidazole répondant à la formule (II) :

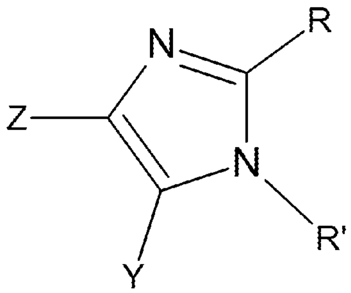

(II)

dans laquelle :

◦ 3 des 4 symboles Z, Y, R et R' identiques ou différents représentent chacun un atome ou un groupe d'atomes, Z et Y pouvant former ensemble avec les atomes de carbone auxquels ils se rattachent un cycle (bien entendu lorsque ni Z, ni Y ne désignent le 4ème symbole),
◦et le seul quatrième symbole désigne un rattachement direct à Sp.

Selon une première variante de l'invention, R désigne un rattachement direct à Sp, auquel cas R est le 4ème symbole.
Selon cette variante, R' peut être un atome d'hydrogène ou un groupe carboné pouvant contenir au moins un hétéroatome.
Selon un mode de réalisation préférentiel de cette variante, R' représente un groupe carboné contenant de 1 à 20 atomes de carbone, préférentiellement un groupe aliphatique, plus préférentiellement un groupe alkyle qui contient de préférence de 1 à 12 atomes de carbone.
Selon une seconde variante de l'invention, R' désigne un rattachement direct à Sp, auquel cas R' est le 4ème symbole.
Selon la première ou la seconde variante, Z et Y peuvent être chacun un atome d'hydrogène.
Selon la première variante ou la seconde variante, Z et Y peuvent former ensemble avec les atomes de carbone auxquels ils se rattachent un cycle. Le cycle formé par Z, Y et les atomes auxquels Z et Y se rattachent peut être substitué ou non et peut comporter au moins un hétéroatome. Z et Y peuvent former avec les deux atomes de carbone auxquels ils se rattachent un noyau aromatique. Dans ce cas, le cycle imidazole peut être un benzimidazole substitué ou non substitué.
Selon une troisième variante de l'invention, bien entendu lorsque Y et Z ne forment pas ensemble avec les atomes de carbone auxquels ils se rattachent un cycle, Y ou Z désigne un rattachement direct à Sp, auquel cas Y ou Z est le 4ème symbole.
Selon la seconde ou la troisième variante de l'invention, R représente avantageusement un atome d'hydrogène ou un groupe carboné pouvant contenir au moins un hétéroatome. Dans ce cas, R peut être un groupe de 1 à 20 atomes de carbone, de préférence un groupe aliphatique, de manière plus préférentielle un groupe alkyle contenant de préférence de 1 à 12 atomes de carbone, de manière encore plus préférentielle un méthyle.
Avantageusement, Sp est divalent.
Sp peut être un groupe contenant jusqu'à 20 atomes de carbone, lequel groupe peut contenir au moins un hétéroatome. Sp peut être un groupe aliphatique ou aromatique.
Lorsque Sp est un groupe aliphatique, Sp contient préférentiellement de 1 à 20 atomes de carbone, plus préférentiellement de 1 à 12 atomes de carbone, encore plus préférentiellement de 1 à 6 atomes de carbone, tout particulièrement de 1 à 3 atomes de carbone. Lorsque Sp est un groupe aromatique, Sp contient préférentiellement de 6 à 20 atomes de carbone, plus préférentiellement de 6 à 12 atomes de carbone.
Avantageusement, Sp est un groupe divalent choisi parmi les groupes alkylènes contenant de 1 à 20 atomes de carbone, préférentiellement de 1 à 12 atomes de carbone, plus préférentiellement de 1 à 6 atomes de carbone, encore plus préférentiellement de 1 à 3 atomes de carbone. De préférence encore, Sp O est un groupe divalent contenant de 1 à 3

atomes de carbone, de préférence le groupe méthylène.

Comme groupe divalent Sp peut aussi convenir un groupe arylène contenant de préférence de 6 à 20 atomes de carbone, plus préférentiellement de 6 à 12 atomes de carbone.

Comme composés 1,3-dipolaires , conviennent tout particulièrement les composés choisis dans le groupe constitué par les oxydes de nitrile, les imines de nitrile et les nitrones, auquel cas Q contient un motif -C≡N→O, -C≡N→N- ou -C=N(→O)-.

Lorsque Q comprend un motif -C≡N→O, Q de préférence comporte, de manière plus préférentielle représente le motif répondant à la formule (V) :

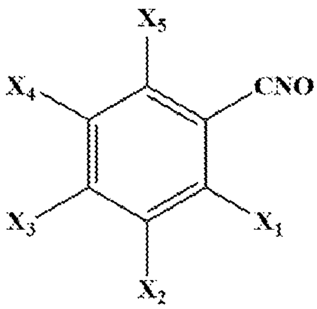

(V)

dans laquelle quatre des cinq symboles $X_1$ à $X_5$ identiques ou différents, sont chacun un atome ou un groupe d'atomes et le cinquième symbole désigne un rattachement direct à Sp, sachant que $X_1$ et $X_5$ sont tous les deux différents de H. Les quatre des cinq symboles $X_1$ à $X_5$ peuvent être des groupes aliphatiques ou aromatiques. Les groupes aliphatiques peuvent contenir de 1 à 20 atomes de carbone, préférentiellement de 1 à 12 atomes de carbone, plus préférentiellement de 1 à 6 atomes de carbone, encore plus préférentiellement de 1 à 3 atomes de carbone. Les groupes aromatiques peuvent contenir de 6 à 20 atomes de carbone, préférentiellement de 6 à 12 atomes de carbone.

$X_1$, $X_3$ et $X_5$ sont préférentiellement chacun un groupe alkyle de 1 à 6 atomes de carbone, plus préférentiellement de 1 à 3 atomes de carbone, encore plus préférentiellement un groupe méthyle ou éthyle.

Avantageusement, $X_1$, $X_3$ et $X_5$ sont identiques. En outre, $X_1$, $X_3$ et $X_5$ sont préférentiellement chacun un groupe alkyle de 1 à 6 atomes de carbone, plus préférentiellement de 1 à 3 atomes de carbone, encore plus préférentiellement un groupe méthyle ou éthyle.

De manière particulièrement avantageuse, le composé 1,3-dipolaire est le composé 2,4,6-triméthyl-3-((2-méthyl-1*H*-imidazol-1-yl)méthyl)benzonitrile oxyde répondant à la formule (Va) ou le composé 2,4,6-triéthyl-3-((2-méthyl-1*H*-imidazol-1-yl)méthyl)benzonitrile oxyde répondant à la formule (Vb) :

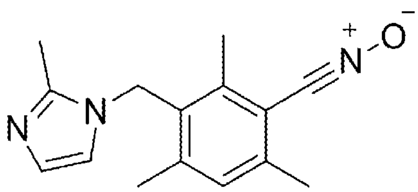

(Va)

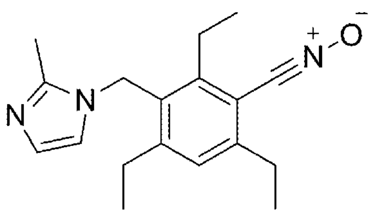

(Vb)

Lorsque Q comprend un motif -C=N(→O)-, Q peut comporter le motif répondant à la formule (VI) ou (VII) :

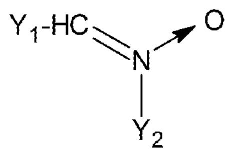

(VI)

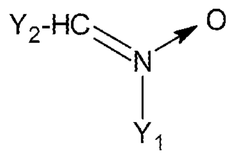

(VII)

dans laquelle :

- $Y_1$ est un groupe aliphatique, préférentiellement un groupe alkyle contenant de préférence 1 à 12 atomes de carbone, ou un groupe aromatique contenant de 6 à 20 atomes de carbone, préférentiellement un groupe alkylaryle, plus préférentiellement un groupe phényle ou tolyle, et
- $Y_2$ , comportant un rattachement direct à Sp, est un groupe aliphatique, préférentiellement un groupe alkylène contenant de préférence 1 à 12 atomes de carbone, ou un groupe aromatique contenant préférentiellement de 6 à 20 atomes de carbone et comportant sur son noyau benzénique le rattachement direct à Sp.

Dans ce cas, le rattachement direct du noyau benzénique de $Y_2$ à Sp revient à dire que Sp est un substituant du noyau benzénique de $Y_2$.

Lorsque Q comprend un motif -C=N(→O)-, le composé 1,3-dipolaire peut être le composé de formule (VIa), (VIb), (VIIa) ou (VIIb) :

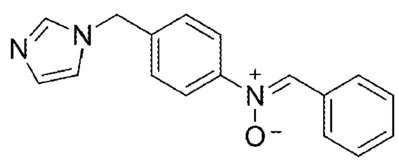

(VIa)

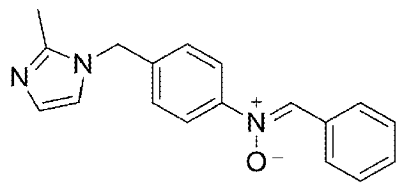

(VIb)

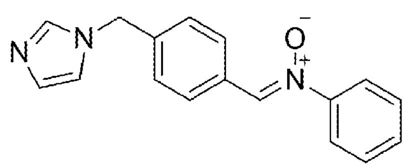

(VIIa)

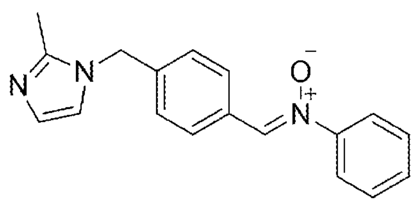

(VIIb)

Des composés 1,3-dipolaire répondant à la formule (I) peuvent aisément être synthétisés en suivant un procédé de synthèse décrit au paragraphe IV-2 ci-après.

La quantité du composé 1,3-dipolaire introduite dans la composition de caoutchouc est exprimée en équivalent molaire de cycle imidazole. Par exemple, si le composé 1,3-dipolaire contient un seul cycle imidazole de formule (II) tel que défini précédemment, à une mole de composé 1,3-dipolaire correspond une mole de cycle imidazole. Si le composé 1,3-dipolaire contient deux cycles imidazole de formule (II) tel que défini précédemment, à une mole de composé 1,3-dipolaire correspond deux moles de cycle imidazole. Dans ce dernier cas l'utilisation du composé 1,3-dipolaire selon un équivalent molaire de cycle imidazole correspond à une demi-mole de composé 1,3-dipolaire.

Selon l'invention, la quantité du composé 1,3-dipolaire dans la composition peut être comprise entre 0 et 50, de préférence entre 0,01 et 15, équivalents molaires pour 100 moles d'unités monomères constituant le copolymère. Par exemple, elle peut être comprise entre 4 et 15 équivalents molaires, par exemple entre 5 et 15 équivalents molaires. Toutefois, de manière préférentielle, la quantité de composé 1,3-dipolaire dans la composition est préférentiellement comprise entre 0 et 3 équivalents molaires, plus préférentiellement entre 0 et 2 équivalents molaires, encore plus préférentiellement entre 0 et 1 équivalent molaire, voire encore plus préférentiellement entre 0 et 0,7 équivalent molaire de cycle imidazole pour 100 moles d'unités monomères constituant le copolymère. Ces plages préférentielles permettent d'optimiser de façon plus fine le compromis entre la rigidité à cuit et l'hystérèse de la composition de caoutchouc selon son application, notamment dans un pneumatique. De préférence encore, la quantité de composé 1,3-dipolaire dans la composition est préférentiellement comprise entre 0,03 et 3 équivalents molaires, préférentiellement entre 0,05 et 2 équivalents molaires, encore plus préférentiellement entre 0,07 et 1 équivalent molaire, voire encore plus préférentiellement entre 0,08 et 0,7 équivalent molaire, de cycle imidazole pour 100 moles d'unités monomères constituant le copolymère.

II-3 Charge

La composition selon l'invention a également comme caractéristique essentielle d'être à base d'une charge renforçante comprenant du noir de carbone, le noir de carbone représentant plus de 50% en poids de la charge renforçante, la fraction volumique de charge dans la composition de caoutchouc étant supérieure à 18%.

La fraction volumique de charge dans une composition de caoutchouc est définie comme étant le rapport du volume de la charge sur le volume de l'ensemble des constituants de la composition, étant entendu que le volume de l'ensemble des constituants est calculé en additionnant le volume de chacun des constituants de la composition.

Les noirs utilisables dans le cadre de la présente invention peuvent être tout noir conventionnellement utilisé dans les bandages pneumatiques ou non-pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO 97/36724 ou WO 99/16600). Des mélanges de plusieurs noirs de carbone peuvent également être utilisés dans les taux prescrits.

Avantageusement, la charge comprend plus de 50% en poids, de préférence plus de 80% en poids, de noir de carbone. De préférence encore la charge est exclusivement constituée de noir de carbone, c'est-à-dire que le noir de carbone représente 100% en poids de la charge.

Avantageusement, la charge comprend plus de 50% en poids, de préférence plus de 80% en poids, d'au moins un noir de carbone présentant une surface spécifique BET comprise dans un domaine allant de 60 à 160 $m^2/g$, de préférence de 70 à 130 $m^2/g$, de préférence de 100 à 120 $m^2/g$. La surface spécifique BET des noirs de carbone est mesurée selon la norme ASTM D6556-10 [méthode multipoints (au minimum 5 points) - gaz : azote - domaine de pression relative P/P0 : 0.1 à 0.3].

Avantageusement, le taux de charge dans la composition selon l'invention est compris dans un domaine allant de 47 à 120 pce, de préférence de 49 à 110 pce, de préférence de 50 à 105 pce, de préférence de 55 à 85 pce.

Avantageusement, la fraction volumique de charge dans la composition de caoutchouc est supérieure à 19%, de préférence comprise dans un domaine allant de 20% à 26%, de préférence de 21% à 24%.

En outre, le taux de noir de carbone (qu'il y en ait un ou plusieurs) dans la composition selon l'invention est avantageusement compris dans un domaine allant de 47 à 80 pce, de préférence de 49 à 80 pce, de préférence de 49 à 75 pce, de préférence de 49 à 70 pce ou bien de 50 à 75 pce, de préférence de 55 à 75 pce.

Avantageusement, la fraction volumique de noir de carbone, de préférence de noir de carbone présentant une surface spécifique BET comprise dans un domaine allant de 60 à 160 $m^2/g$, de préférence de 70 à 130 $m^2/g$, dans la composition de caoutchouc, est supérieure à 18%, de préférence supérieur ç 19%, de préférence comprise dans un domaine allant de 20% à 26%, de préférence de 21% à 24%.

La composition selon l'invention peut comprendre des charges autres que du noir de carbone mais cela n'est pas obligatoire ni préférable. Il peut s'agir notamment de charge inorganique telle que de la silice.

II-4 Système de réticulation

Le système de réticulation peut être tout type de système connu de l'homme de l'art dans le domaine des compositions de caoutchouc pour pneumatique. Il peut notamment être à base de soufre, et/ou de peroxyde et/ou de bismaléimides.

De manière préférentielle, le système de réticulation est à base de soufre, on parle alors d'un système de vulcanisation. Le soufre peut être apporté sous toute forme, notamment sous forme de soufre moléculaire et/ou d'agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tel que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 0,3 et 12 pce, en particulier entre 0,5 et 5,0 pce. L'accélérateur de vulcanisation est utilisé à un taux préférentiel compris entre 0,5 et 10 pce, plus préférentiellement compris entre 0,5 et 5,0 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

II-5 Additifs possibles

Les compositions de caoutchouc peuvent comporter optionnellement également tout ou partie des additifs usuels habituellement utilisés dans les compositions d'élastomères pour pneumatique, comme par exemple des plastifiants (tels que des huiles plastifiantes et/ou des résines plastifiantes), des pigments, des agents de protection tels que cires anti-ozone, anti-ozonants chimiques, anti-oxydants, des agents anti-fatigue, des résines renforçantes (telles que décrites par exemple dans la demande WO 02/10269).

Avantageusement, la composition selon l'invention ne comprenant pas de résine plastifiante hydrocarbonée ou en comprend moins de 10 pce, de préférence moins de 5 pce. De préférence encore la composition selon l'invention ne comprend pas de résine plastifiante hydrocarbonée. La composition selon l'invention ne comprend également avantageusement pas d'huile plastifiante liquide à 20°C ou en comprend moins de 15 pce, de préférence moins de 10 pce, de préférence moins de 5 pce. De préférence encore la composition selon l'invention ne comprend pas d'huile plastifiante liquide à 20°C.

II-6 Préparation des compositions de caoutchouc

Les compositions conformes à l'invention peuvent être fabriquées dans des mélangeurs appropriés, en utilisant deux phases de préparation successives bien connues de l'homme du métier :

- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, la charge renforçante, les éventuels autres additifs divers, à l'exception du système de réticulation. L'incorporation de la charge éventuelle à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation. La phase non-productive peut être réalisée à haute température, jusqu'à une température maximale comprise entre 110°C et 200°C, de préférence entre 130°C et 185°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C.On incorpore alors le système de réticulation, et le tout est alors mélangé pendant quelques minutes, par exemple entre 5 et 15 min.

De telles phases ont été décrites par exemple dans les demandes EP-A-0501227, EP-A-0735088, EP-A-0810258, WO00/05300 ou WO00/05301.

La composition finale ainsi obtenue est ensuite calandrée par exemple sous la forme d'une feuille ou d'une plaque, notamment pour une caractérisation au laboratoire, ou encore extrudée (ou co-extrudée avec une autre composition de caoutchouc) sous la forme d'un semi-fini (ou profilé) de caoutchouc utilisable par exemple comme bande de roulement de pneumatique. Ces produits peuvent ensuite être utilisés pour la fabrication de pneumatiques, selon les techniques connues de l'homme du métier.

La réticulation de la composition peut être conduite de manière connue de l'homme du métier, par exemple à une température comprise entre 130°C et 200°C, sous pression.

Est également décrit dans la présente un procédé pour préparer la composition de caoutchouc conforme à l'invention comprenant les étapes suivantes :

- ajouter au cours d'une première étape dite non productive au copolymère le composé 1,3-dipolaire, la charge, en malaxant thermomécaniquement jusqu'à atteindre une température maximale comprise entre 130 et 200°C,
- refroidir l'ensemble à une température inférieure à 100°C,
- incorporer ensuite le système de réticulation,
- malaxer le tout jusqu'à une température maximale inférieure à 120°C.

La quantité de composé 1,3-dipolaire ajoutée est préférentiellement comprise entre 0 et 3 équivalents molaires, plus préférentiellement entre 0 et 2 équivalents molaires, encore plus préférentiellement entre 0 et 1 équivalent molaire, voire encore plus préférentiellement entre 0 et 0,7 équivalent molaire de cycle imidazole pour 100 moles d'unités monomères constituant le copolymère. Pour chacune de ces plages préférentielles, la borne inférieure est de préférence d'au moins 0,1 équivalent molaire de composé 1,3-dipolaire.

Avantageusement, le composé 1,3-dipolaire est mélangé au copolymère avant l'introduction des autres constituants de la composition de caoutchouc, notamment avant l'ajout de la charge. Le temps de contact entre le copolymère et le composé 1,3-dipolaire qui sont mélangés, de préférence malaxés thermomécaniquement, est ajusté en fonction des conditions du mélangeage, en particulier du malaxage thermomécanique, notamment en fonction de la température. Plus la température est élevée, plus ce temps de contact est court. Typiquement il est de 1 à 5 minutes pour une température de 100 à 130°C.

De préférence, on ajoute de préférence au moins un antioxydant au copolymère avant son introduction dans un mélangeur, notamment à la fin de la synthèse du copolymère comme cela se fait conventionnellement.

Après l'incorporation de tous les ingrédients de la composition de caoutchouc, la composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé comme composant caoutchouteux pour la confection du pneumatique.

II -7 Articles en caoutchouc

La présente invention a également pour objet un article de caoutchouc comprenant au moins une composition selon l'invention.

Compte tenu du compromis de performances amélioré dans le cadre de la présente invention, l'article de caoutchouc est avantageusement choisi dans le groupe constitué par les bandages pneumatiques, les bandages non pneumatiques, les chenilles et les bandes transporteuses. De préférence, l'article de caoutchouc est un bandage pneumatique ou non-pneumatique.

Plus particulièrement, l'invention a également pour objet un bandage pneumatique ou non pneumatique pourvu d'une bande de roulement comprenant une composition selon l'invention.

Une bande de roulement présente une surface de roulement pourvue d'une sculpture formée par une pluralité de rainures délimitant des éléments en relief (blocs, nervures) de façon à générer des arêtes de matière ainsi que des creux. Ces rainures représentent un volume de creux qui, rapporté au volume total de la bande de roulement (incluant à la fois le volume d'éléments en relief et celui de toutes les rainures) s'exprime par un pourcentage désigné dans la présente par "taux de creux volumique". Un taux de creux volumique égal à zéro indique une bande de roulement sans rainure ni creux.

La présente invention est particulièrement bien adaptée aux bandes de roulement de bandages destinés à équiper des véhicules de génie civil, agricoles et au poids-lourds, plus particulièrement des véhicules de génie civil dont les bandages sont soumis à des contraintes bien spécifiques, notamment les sols caillouteux sur lesquels ils roulent. Ainsi, avantageusement, le bandage pneumatique ou non pneumatique pourvu d'une bande de roulement comprenant une composition selon l'invention est un bandage de véhicule de génie civil, agricole ou poids lourds, de préférence de génie civil. Ces bandages sont pourvus de bandes de roulement qui présentent, par rapport aux épaisseurs des bandes de roulement des pneumatiques pour véhicules légers, en particulier pour véhicules tourisme ou camionnette, de grandes

épaisseurs de matériau caoutchoutique. Typiquement la partie usante de la bande de roulement d'un bandage pour poids lourd présente une épaisseur d'au moins 15 mm, celle d'un véhicule génie civil d'au moins 30 mm, voire jusqu'à 120 mm. Ainsi, la bande de roulement du bandage selon l'invention présente avantageusement une ou plusieurs rainures dont la profondeur moyenne va de 15 à 120 mm, de préférence 65 à 120 mm.

Les bandages pneumatiques selon l'invention peuvent avoir un diamètre allant de 20 à 63 pouces, de préférence de 35 à 63 pouces.

Par ailleurs, le taux moyen de creux volumique sur l'ensemble de la bande de roulement du bandage pneumatique ou non-pneumatique selon l'invention peut être compris dans un domaine allant de 5 à 40 %, de préférence de 5 à 25 %.

L'invention a également pour objet une chenille en caoutchouc comprenant au moins un élément en caoutchouc comprenant une composition selon l'invention, l'au moins un élément en caoutchouc étant de préférence une courroie sans fin en caoutchouc ou une pluralité de patins en caoutchouc, ainsi qu'une bande transporteuse en caoutchouc comprenant une composition selon l'invention.

L'invention concerne les articles en caoutchouc précédemment décrits tant à l'état cru (c'est-à-dire, avant cuisson) qu'à l'état cuit (c'est-à-dire, après réticulation ou vulcanisation).

**III- MODES DE REALISATION PREFERES**

Au vu de ce qui précède, les réalisations préférées de l'invention sont décrites ci-dessous :

**1.** Composition de caoutchouc à base d'au moins :

- une matrice élastomère comprenant plus de 50 pce d'un copolymère contenant des unités éthylène et des unités 1,3-diène, les unités éthylène dans le copolymère représentant plus de 50% en mole des unités monomères du copolymère,
- un composé 1,3-dipolaire répondant à la formule (I)

**Q-Sp-B** (I)

dans laquelle :

◦ Q comprend un dipôle contenant au moins et de préférence un atome d'azote,
◦ Sp, de préférence divalent, est un atome ou un groupe d'atomes reliant Q à B,
◦ B comprend un cycle imidazole répondant à la formule (II) suivante

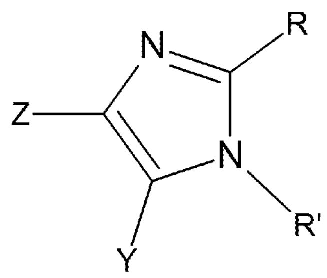

(II)

dans laquelle :

- 3 des 4 symboles Z, Y, R et R', identiques ou différents, représentent chacun un atome ou un groupe d'atomes, Z et Y pouvant former ensemble avec les atomes de carbone auxquels ils se rattachent un cycle,
- et le quatrième symbole Z, Y, R ou R' désigne un rattachement direct à Sp,

- une charge renforçante comprenant du noir de carbone, le noir de carbone représentant plus de 50% en poids de la charge renforçante, la fraction volumique de charge dans la composition de caoutchouc étant supérieure à 18%,
- un système de réticulation.

**2.** Composition selon la réalisation 1, dans laquelle les unités éthylène dans le copolymère représentent entre 50% et

95%, de préférence entre 55% et 90%, en mole des unités monomères du copolymère.

**3.** Composition selon l'une quelconque des réalisations précédentes, dans laquelle le copolymère contenant des unités éthylène et des unités 1,3-diène est un copolymère d'éthylène et de 1,3-diène.

**4.** Composition selon l'une quelconque des réalisations précédentes, dans laquelle le 1,3-diène est le 1,3-butadiène.

**5.** Composition selon l'une quelconque des réalisations précédentes, dans laquelle le copolymère contient des unités de formule (III) ou des unités de formule (IV) ou encore des unités de formule (III) et de formule (IV) :

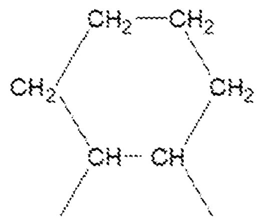

(III)

-CH2-CH(CH=CH2)- (IV)

**6.** Composition selon la réalisation 5, dans laquelle les pourcentages molaires des unités de formule (III) et des unités de formule (IV) dans le copolymère, respectivement o et p, satisfont à l'équation suivante (eq. 1), de manière préférentielle à l'équation (eq. 2), o et p étant calculés sur la base de l'ensemble des unités monomères du copolymère

$$0 < o+p \leq 25 \qquad \text{(eq. 1)}$$

$$0 < o+p < 20 \qquad \text{(eq. 2)}$$

**7.** Composition selon l'une quelconque des réalisations précédentes, dans laquelle le copolymère contenant des unités éthylène et des unités 1,3-diène est un copolymère statistique.

**8.** Composition selon l'une quelconque des réalisations précédentes, dans laquelle le taux du copolymère contenant des unités éthylène et des unités 1,3-diène est compris dans un domaine allant de 60 à 100 pce, de préférence de 80 à 100 pce.

**9.** Composition selon l'une quelconque des réalisations précédentes, dans laquelle R' désigne un rattachement direct à Sp.

**10.** Composition selon l'une quelconque des réalisations précédentes, dans laquelle Z et Y sont chacun un atome d'hydrogène.

**11.** Composition selon l'une quelconque des réalisations 1 à 9, dans laquelle Z et Y forment ensemble avec les atomes de carbone auxquels ils se rattachent un cycle, de préférence aromatique.

**12.** Composition selon l'une quelconque des réalisations précédentes, dans laquelle R représente un atome d'hydrogène ou un groupe carboné pouvant contenir au moins un hétéroatome et contenant de préférence de 1 à 20 atomes de carbone.

**13.** Composition selon l'une quelconque des réalisations précédentes, dans laquelle R est un groupe aliphatique, préférentiellement un groupe alkyle qui contient de préférence de 1 à 12 atomes de carbone.

**14.** Composition selon l'une quelconque des réalisations précédentes, dans laquelle R est un méthyle.

**15.** Composition selon l'une quelconque des réalisations précédentes, dans laquelle Sp est un groupe contenant jusqu'à 20 atomes de carbone et pouvant contenir au moins un hétéroatome.

**16.** Composition selon l'une quelconque des réalisations précédentes, dans laquelle Sp est un groupe aliphatique contenant préférentiellement de 1 à 20 atomes de carbone, plus préférentiellement de 1 à 12 atomes de carbone, encore plus préférentiellement de 1 à 6 atomes de carbone, ou un groupe aromatique contenant préférentiellement de 6 à 20 atomes de carbone, plus préférentiellement de 6 à 12 atomes de carbone.

**17.** Composition selon l'une quelconque des réalisations précédentes, dans laquelle Sp est un groupe alkylène contenant de 1 à 20 atomes de carbone, préférentiellement de 1 à 12 atomes de carbone, plus préférentiellement de 1 à 6 atomes de carbone, encore plus préférentiellement de 1 à 3 atomes de carbone, ou un groupe arylène contenant préférentiellement de 6 à 20 atomes de carbone, plus préférentiellement de 6 à 12 atomes de carbone.

**18.** Composition selon l'une quelconque des réalisations précédentes, dans laquelle le composé 1,3-dipolaire est choisi dans le groupe constitué par les oxydes de nitrile, les imines de nitrile et les nitrones.

**19.** Composition selon l'une quelconque des réalisations précédentes, dans laquelle Q contient un motif -C=N → O.

**20.** Composition selon l'une quelconque des réalisations précédentes, dans laquelle Q comporte, de préférence représente le motif répondant à la formule (V) :

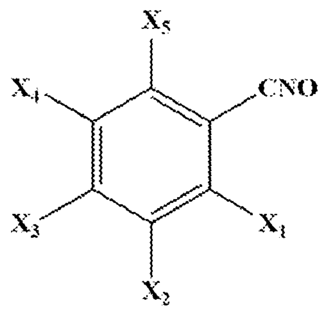

(V)

dans laquelle :
quatre des cinq symboles $X_1$ à $X_5$ identiques ou différents, sont chacun un atome ou un groupe d'atomes, préférentiellement un groupe aliphatique ou un groupe aromatique, et le cinquième symbole désigne un rattachement direct à Sp, sachant que $X_1$ et $X_5$ ne sont pas des atomes d'hydrogène.

**21.** Composition selon la réalisation 20, dans laquelle $X_1$, $X_3$ et $X_5$ sont identiques.

**22.** Composition selon la réalisation 20 ou 21 dans laquelle $X_1$, $X_3$ et $X_5$ sont chacun un groupe alkyle de 1 à 6 atomes de carbone, préférentiellement de 1 à 3 atomes de carbone.

**23.** Composition selon l'une quelconque des réalisations 20 à 22, dans laquelle $X_1$, $X_3$ et $X_5$ sont chacun un méthyle ou éthyle, de préférence un méthyle.

**24.** Composition selon l'une quelconque des réalisations précédentes, dans laquelle le composé 1,3-dipolaire est le 2,4,6-triméthyl-3-((2-méthyl-IH-imidazol-1-yl)méthyl)benzonitrile oxyde ou le 2,4,6-triéthyl-3-((2-méthyl-IH-imidazol-1-yl)méthyl)benzonitrile oxyde, de préférence le 2,4,6-triméthyl-3-((2-méthyl-IH-imidazol-1-yl)méthyl)benzonitrile oxyde.

**25.** Composition selon l'une quelconque des réalisations précédentes, dans laquelle le taux du composé 1,3-dipolaire est compris entre 0 et 50, de préférence entre 0,01 et 15, équivalents molaires, par exemple entre 4 et 15 équivalents molaires, pour 100 moles d'unités monomères constituant le copolymère.

**26.** Composition selon l'une quelconque des réalisations 1 à 24, dans laquelle le taux du composé 1,3-dipolaire est compris entre 0,1 et 3 équivalents molaires, préférentiellement entre 0,1 et 2 équivalents molaires, encore plus préférentiellement entre 0,1 et 1 équivalent molaire, voire encore plus préférentiellement entre 0,1 et 0,7 équivalent molaire, de cycle imidazole pour 100 moles d'unités monomères constituant le copolymère.

**27.** Composition selon l'une quelconque des réalisations précédentes, dans laquelle la charge comprend plus de 70% en poids, de préférence plus de 80% en poids de noir de carbone.

**28.** Composition selon l'une quelconque des réalisations précédentes, dans laquelle la charge comprend 100% en poids de noir de carbone.

**29.** Composition selon l'une quelconque des réalisations précédentes, dans laquelle le taux de charge est compris dans un domaine allant de 47 à 120 pce, de préférence de 49 à 110 pce, de préférence de 50 à 105 pce, de préférence de 55 à 85.

**30.** Composition selon l'une quelconque des réalisations précédentes, dans laquelle la fraction volumique de charge dans la composition de caoutchouc est supérieure à 19%, de préférence comprise dans un domaine allant de 20% à 26%, de préférence de 21% à 24%.

**31.** Composition selon l'une quelconque des réalisations précédentes, dans laquelle le taux de noir de carbone est compris dans un domaine allant de 47 à 80 pce, de préférence de 49 à 80 pce, de préférence de 49 à 75 pce, de préférence de 49 à 70 pce, ou bien de 50 à 75 pce, de préférence de 55 à 75 pce.

**32.** Composition selon l'une quelconque des réalisations précédentes, dans laquelle la fraction volumique de noir de carbone dans la composition de caoutchouc est supérieure à 18% de préférence supérieur à 19%, de préférence comprise dans un domaine allant de 20% à 26%, de préférence de 21% à 24%.

**33.** Composition selon l'une quelconque des réalisations précédentes, laquelle composition ne comprenant pas de résine plastifiante hydrocarbonée ou en comprenant moins de 10 pce, de préférence moins de 5 pce.

**34.** Composition selon l'une quelconque des réalisations précédentes, la composition ne comprend pas d'huile plastifiante liquide à 20°C ou en comprend moins de 15 pce, de préférence moins de 10 pce, de préférence moins de 5 pce.

**35.** Composition selon l'une quelconque des réalisations précédentes, dans laquelle le système de réticulation est un système de vulcanisation à base de soufre moléculaire et/ou d'agent donneur de soufre.

**36.** Article de caoutchouc comprenant une composition telle que définie à l'une quelconque des réalisations 1 à 35.
**37.** Article de caoutchouc selon la réalisation 36, ledit article étant choisi dans le groupe constitué par bandages pneumatiques, les bandages non pneumatiques, les chenilles et les bandes transporteuses.
**38.** Bandage pneumatique ou non pneumatique pourvue d'une bande de roulement comprenant une composition telle que définie à l'une quelconque des réalisations 1 à 35.
**39.** Bandage selon la réalisation 38, étant un bandage de véhicule de génie civil, agricole ou poids lourds, de préférence de génie civil.
**40.** Bandage selon la réalisation 38 ou 39, dans lequel la composition est présente dans au moins 50%, de préférence au moins 70%, du volume de la bande de roulement.
**41.** Bandage selon l'une quelconque des réalisations 38 à 40, dont la bande de roulement présente une ou plusieurs rainures dont la profondeur moyenne est comprise dans un domaine allant de 30 à 120 mm, de préférence de 45 à 75 mm.
**42.** Bandage selon l'une quelconque des réalisations 38 à 41 présentant un taux moyen de creux volumique sur l'ensemble de la bande de roulement compris dans un domaine allant de 5 à 40 %, de préférence de 5 à 25 %.
**43.** Bandage selon l'une quelconque des réalisations 38 à 42, présentant un diamètre compris dans un domaine allant de 20 à 63 pouces, de préférence de 35 à 63 pouces.
**44.** Chenille comprenant au moins un élément en caoutchouc comprenant une composition telle que définie à l'une quelconque des réalisations 1 à 35.
**45.** Chenille selon la réalisation 44, dans laquelle l'au moins un élément en caoutchouc est une courroie sans fin en caoutchouc ou une pluralité de patins en caoutchouc.
**46.** Bande transporteuse en caoutchouc comprenant une composition telle que définie à l'une quelconque des réalisations 1 à 35.

## IV- EXEMPLES

### IV-1 Mesures et tests utilisés

*Détermination des masses molaires : Analyse par Chromatographie d'Exclusion Stérique des copolymères*

a) Pour les copolymères solubles à température ambiante dans le tétrahydrofuranne (THF), on a déterminé les masses molaires par chromatographie d'exclusion stérique dans le THF. On a injecté les échantillons à l'aide d'un injecteur « Waters 717 » et d'une pompe " Waters 515 HPLC " à un débit de 1 $ml.min^{-1}$ dans une série de colonnes " Polymer Laboratories ". Cette série de colonnes, placée dans une enceinte thermostatée à 45°C, est composée de :

- 1 précolonne PL Gel 5 µm,
- 2 colonnes PL Gel 5 µm Mixte C,
- 1 colonne PL Gel 5 µm-500 Å.

On a réalisé la détection à l'aide d'un réfractomètre " Waters 410 ". On a déterminé les masses molaires par calibration universelle en utilisant des étalons de polystyrène certifiés par " Polymer Laboratories " et une double détection avec réfractomètre et couplage au viscosimètre.
Sans être une méthode absolue, la SEC permet d'appréhender la distribution des masses moléculaires d'un polymère. A partir de produits étalons commerciaux de type Polystyrène les différentes masses moyennes en nombre (Mn) et en poids (Mw) peuvent être déterminées et l'indice de polymolécularité calculé (Ip = Mw/Mn).
b) Pour les copolymères insolubles à température ambiante dans le tétrahydrofuranne, les masses molaires ont été déterminées dans le 1,2,4- trichlorobenzène. On les a tout d'abord dissous à chaud (4 h 00 à 150°C), puis on les a injectés à 150°C avec un débit de 1 $ml.min^{-1}$ dans un chromatographe " Waters Alliance GPCV 2000 " équipé de trois colonnes " Styragel " (2 colonnes " HT6E " et 1 colonne " HT2 "). On a effectué la détection à l'aide d'un réfractomètre " Waters ". On a déterminé les masses molaires par calibration relative en utilisant des étalons polystyrène certifiés par " Polymer Laboratories ".

*Détermination des fractions molaires*

On se reportera à l'article « Investigation of ethylene/butadiene copolymers microstructure by 1H and 13C NMR, Llauro M. F., Monnet C., Barbotin F., Monteil V., Spitz R., Boisson C., Macromolecules 2001, 34, 6304-6311 », pour une description détaillée des techniques de RMN'H et de $RMN^{13}C$ qui ont été précisément utilisées dans la présente demande

pour déterminer les fractions molaires des unités éthylène, unités diéniques conjuguées et des éventuelles unités *trans*-1,2 cyclohexane.

*Analyse RMN*

L'analyse structurale ainsi que la détermination des puretés molaires des molécules de synthèses sont réalisées par une analyse RMN. Les spectres sont acquis sur un spectromètre Avance 3 400 MHz BRUKER équipé d'une sonde" large bande" BBFO-zgrad 5 mm. L'expérience RMN $^1H$ quantitative, utilise une séquence simple impulsion 30° et un délai de répétition de 3 secondes entre chacune des 64 acquisitions. Les échantillons sont solubilisés dans le Diméthylsulfoxide deutéré (DMSO). Ce solvant est également utilisé pour le signal de lock. La calibration est réalisée sur le signal des protons du DMSO deutéré à 2.44ppm par rapport à une référence TMS à 0ppm. Le spectre RMN $^1H$ couplé aux expériences 2D HSQC $^1H/^{13}C$ et HMBC $^1H/^{13}C$ permet la détermination structurale des molécules (cf tableaux d'attributions). Les quantifications molaires sont réalisées à partir du spectre RMN 1D $^1H$ quantitatif.

*Mooney ML 1+4*

La mesure de plasticité Mooney se fait selon le principe suivant et conformément à la norme ASTM D-1646. Le polymère généralement cru est moulé dans une enceinte cylindrique chauffée à une température donnée, usuellement 100°C. Après une minute de préchauffage, un rotor de type L tourne au sein de l'éprouvette à 2 tours par minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre).

*Test chenille*

Ce test est représentatif de la résistance aux agressions. Il consiste à faire rouler une chenille métallique montée sur un bandage pneumatique monté sur roue et véhicule, et gonflé, sur laquelle sont fixés des patins en caoutchouc de composition donnée, sur une piste remplie de cailloux pendant un certain temps. A la fin du roulage on démonte les patins et on compte le nombre de coupures visibles à l'œil nu en surface. Plus le nombre est faible, meilleure est la performance de résistance aux agressions.

Pour réaliser ce test, on a fabriqué des patins de différentes compositions (voir Tableau 1 ci-dessous) selon le procédé décrit au point IV-4 ci-dessous. Pour obtenir un patin, on a calandré la composition non-réticulée obtenue au point IV-4 à une épaisseur de 5,5 mm, découpé des plaques (2 de 260x120 mm, 2 de 250x100 mm et 2 de 235x90 mm) que l'on a ensuite empilées de manière pyramidale. Ce bloc de 6 plaques a ensuite été inséré dans un moule de forme pyramidale à base rectangulaire de 260x120 mm et à sommet plat de 235x90 mm de surface, et cuit à une température de 120°C pendant 300 minutes à une pression de 180 bars, permettant ainsi la réticulation de la composition.

Les patins ont ensuite été montés sur deux chenilles métalliques X-TRACK10 de la société Caterpillar, qui ont elles-mêmes été montées sur deux pneumatiques MICHELIN XMINE D2 12.00R24 du train arrière d'un camion SCANIA R410. Les pneumatiques ont été retaillés pour supporter les chenilles. Les pneumatiques étaient gonflés à une pression de 7 bars et portaient une charge de 4 250 kg par pneumatique.

Le camion a roulé sur une piste sans pente recouverte de cailloux porphyre de taille 30/60 obtenus auprès de SONVOLES Murcia, Espagne, pendant 5 heures à une vitesse de 5 km/h. La densité de cailloux sur la piste était d'environ 1000 à 1500 cailloux au mètre carré.

A la fin du test, les coupures visibles à la surface des patins ont été comptées. Le résultat a été moyenné sur la base de 6 patins. Les résultats de performance aux agressions sont exprimés en pourcentage base 100 par rapport à la composition témoin T1. Un résultat supérieur à 100 indique une amélioration de la résistance aux agressions.

*Essai de traction (après cuisson)*

Les essais d'allongement rupture (AR%) et de contrainte rupture (CR) sont basés sur la norme NF ISO 37 de Décembre 2005 sur une éprouvette haltère de type H2 et sont mesurés à une vitesse de traction de 500 mm/min. L'allongement rupture est exprimé en % d'allongement. La contrainte rupture est exprimée en MPa. Ces valeurs sont exprimées en base 100 par rapport à la composition témoin T1. Une valeur supérieure à 100 traduit une amélioration des propriétés mécaniques de la composition considérée par rapport à la composition témoin.

Toutes ces mesures de traction sont effectuées dans les conditions normales de température (23±2°C) et d'hygrométrie (50±5% d'humidité relative), selon la norme française NF T 40-101 (décembre 1979).

IV-2 Synthèse du composé 1,3-dipolaire 2,4,6-triméthyl-3-((2-méthyl-lH-imidazol-1-yl)méthyl)benzonitrile oxyde

Ce composé peut être préparé selon le schéma réactionnel suivant :

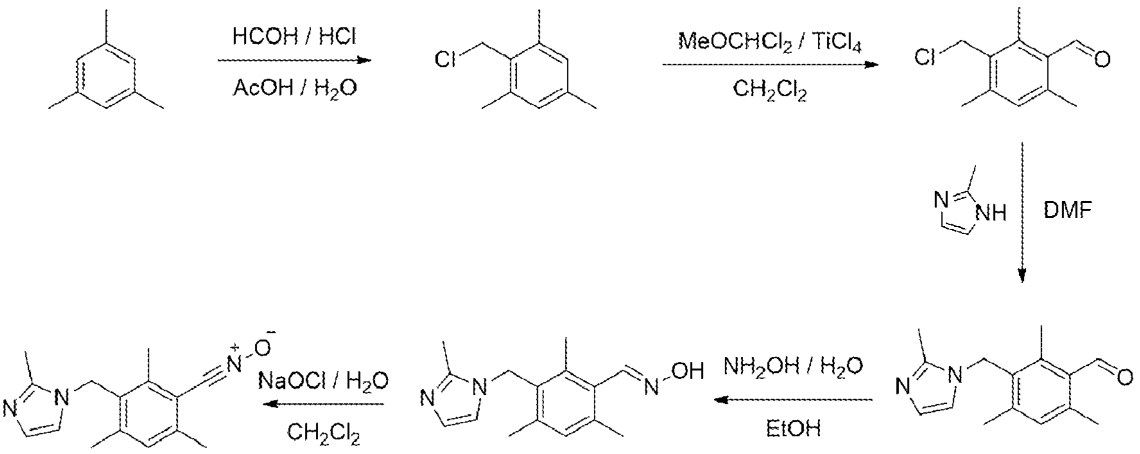


IV.2-1-Synthèse du 2-(chlorométhyl)-1,3,5-triméthylbenzène :

Ce composé peut être obtenu selon une procédure décrite dans l'article Zenkevich, I. G.; Makarov, A. A.; Russian Journal of General Chemistry; vol. 77; nb. 4; (2007); p. 611 - 619 (Zhurnal Obshchei Khimii; vol. 77; nb. 4; (2007); p. 653 - 662)

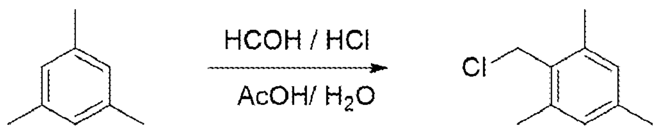


Un mélange de mésitylène (100,0 g, 0,832 mol), de para-formaldéhyde (26,2 g, 0,874 mol) et d'acide chlorhydrique (240 ml, 37 %, 2,906 mol) dans l'acide acétique (240 ml) est agité et chauffé très lentement (1,5 heures) jusqu'à 37°C. Après retour à température ambiante, le mélange est dilué par de l'eau (1,01) avec $CH_2Cl_2$ (200 ml), le produit est extrait par $CH_2Cl_2$ (4 fois par 50 mL). Les phases organiques sont rassemblées, puis lavées par l'eau (5 fois par 100 ml) et évaporées jusqu'à 11-12 mbar (Température du bain = 42°C). Une huile incolore (133,52 g, rendement 95 %) est obtenue. Après 15-18 heures à +4°C, l'huile a cristallisé. Les cristaux sont filtrés, lavés par de l'éther de pétrole refroidi à -18°C (40 ml), puis séchés pendant 3 à 5 heures sous pression atmosphérique à température ambiante. Un solide blanc (95,9 g, rendement 68 %) de point de fusion 39 °C est obtenu. La pureté molaire est supérieure à 96 % (RMN 1H).

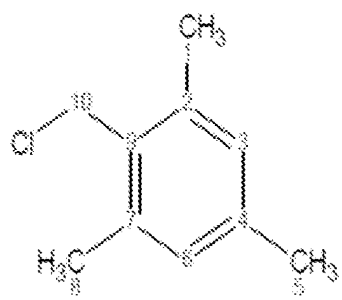

| N° | δ $^1H$ (ppm) | δ $^{13}C$ (ppm) |
|---|---|---|
| 1-8 | 2,27 | 18,4 |
| 2-7 | - | 136,9 |
| 3-6 | 6,81 | 128,5 |
| 4 | - | 137,4 |
| 5 | 2,15 | 20,3 |
| 9 | - | 130,5 |
| 10 | 4,69 | 41,3 |

IV.2-2-Synthèse du 3-(chlorométhyl)-2,4,6-triméthylbenzaldéhyde:

Ce composé peut être obtenu selon une procédure décrite dans l'article Yakubov, A. P.; Tsyganov, D. V.; Belen'kii, L. I.; Krayushkin, M. M.; Bulletin of the Academy of Sciences of the USSR, Division of Chemical Science (English Translation); vol. 40; nb. 7.2; (1991); p. 1427 - 1432 (Izvestiya Akademii Nauk SSSR, Seriya Khimicheskaya; nb. 7; (1991); p. 1609 - 1615)

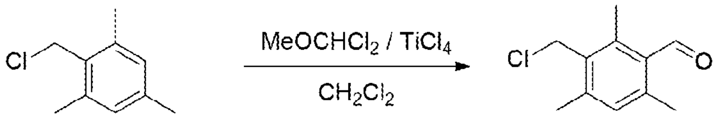


A une solution de $TiCl_4$ (90,0 g, 0,474 mol) dans le dichlorométhane (200 ml) à 17°C est ajoutée sous argon pendant 10-12 minutes une solution du 2-(chlorométhyl)-1,3,5-triméthylbenzène (20,0 g, 0,118 mol) et de dichlorométhylméthyl éther (27,26 g, 0,237 mol) dans le dichlorométhane (200 ml). Après agitation pendant 15-20 minutes à 17-20 °C, de l'eau (1000 ml) et de la glace (500 g) sont ajoutées au milieu réactionnel. Après 10-15 minutes d'agitation, la phase organique est séparée. La phase aqueuse est extraite par $CH_2Cl_2$ (3 fois par 75 ml). Les phases organiques rassemblées sont lavées par l'eau (4 fois par 100 ml) et évaporées sous pression réduite pour conduire à un solide (Température du bain = 28°C). Le produit cible (22,74 g) est obtenu avec un rendement de 97 %. Son point de fusion est de 58 °C. La pureté molaire estimée par RMN $^1H$ est de 95%mol.

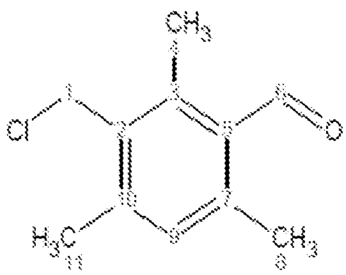

| N° | δ $^1H$ (ppm) | δ $^{13}C$ (ppm) |
|---|---|---|
| 1 | 4,77 | 40,6 |
| 2 | - | 132,9 |
| 3 | - | 139,5 |
| 4 | 2,51 | 14,4 |
| 5 | - | 131,4 |
| 6 | 10,43 | 194,2 |
| 7 | - | 140,1 |
| 8 | 2,41 | 19,3 |
| 9 | 6,99 | 131,2 |
| 10 | - | 142,4 |
| 11 | 2,34 | 19,8 |

IV.2-3-Synthèse du 2,4,6-triméthyl-3-((2-méthyl-1H-imidazol-1-yl)méthyl) benzaldéhyde :

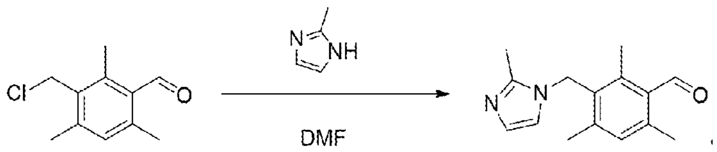


Un mélange de 3-(chlorométhyl)-2,4,6-triméthylbenzaldéhyde (10,0 g, 0,051 mol) et d'imidazole (10,44 g, 0,127 mol) dans le DMF (10 ml) est agité à 80°C pendant une heure.

Après retour à 40-50°C, le mélange est dilué par l'eau (200ml), et agité pendant 10 minutes. Le précipité obtenu est filtré et lavé sur le filtre par l'eau (4 fois par 25 ml) puis séché à température ambiante. Un solide blanc (7,92 g, rendement 64 %) de point de fusion de 161 °C est obtenu. La pureté molaire est 91 % (RMN $^1$H).

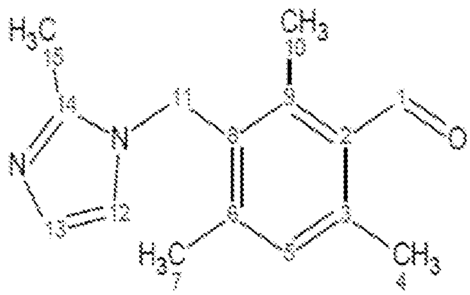

| N° | δ $^1$H (ppm) | δ $^{13}$C (ppm) |
|---|---|---|
| 1 | 10,45 | 194,2 |
| 2 | - | 131,5 |
| 3 | - | 139,5 |
| 4 | 2,44 | 19,6 |
| 5 | 7,04 | 131,2 |
| 6 | - | 142,5 |
| 7 | 2,19 | 19,5 |
| 8 | - | 131 |
| 9 | - | 139,5 |
| 10 | 2,34 | 14,6 |
| 11 | 5,02 | 42,5 |
| 12 | 6,24 | 116,9 |
| 13 | 6,59 | 125,9 |
| 14 | - | 143,9 |
| 15 | 2,32 | 12,7 |

<u>IV.2-4-Synthèse du 2,4,6-triméthyl-3-((2-méthyl-1H-imidazol-1-yl)méthyl)benzaldéhyde oxime :</u>

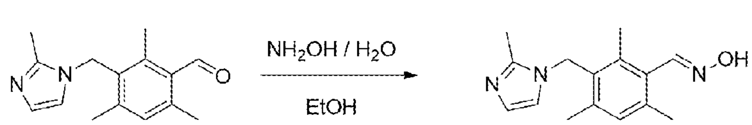


A une solution de 2,4,6-triméthyl-3-((2-méthyl-1H-imidazol-1-yl)méthyl) benzaldéhyde (20.3 g, 0,084mol) dans EtOH (110 ml) à 40°C, est ajoutée une solution aqueuse d'hydroxylamine (809 g, 0,134 mol, 50 % dans l'eau, Aldrich) dans EtOH (10 ml). Le milieu réactionnel est agité pendant 2,5 heures à une température de 50 à 55°C. Après retour à 23°C, le précipité obtenu est filtré et lavé deux fois sur le filtre par un mélange EtOH/$H_2O$ (10 ml/15 ml) et séché pendant 15 à 20 heures sous pression atmosphérique à température ambiante. Un solide blanc (19.57 g, rendement 91 %) de point de fusion de 247°C est obtenu. La pureté molaire est supérieure à 87 % (RMN $^1$H).

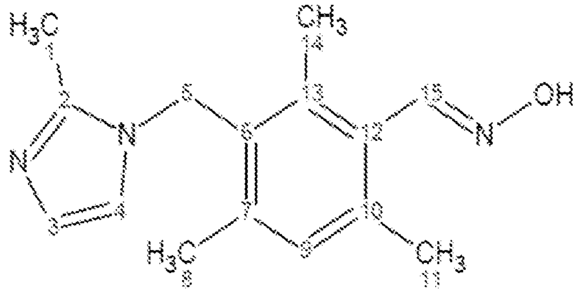

| N° | δ $^1$H (ppm) | δ $^{13}$C (ppm) |
|---|---|---|
| 1 | 2,31 | 12,7 |
| 2 | - | 143,4 |
| 3 | 6,58 | 125,8 |
| 4 | 6,22 | 116,9 |
| 5 | 4,97 | 43,2 |
| 6 | - | 128,3 |
| 7 | - | 136,2 |
| 8 | 2,23 | 20,2 |
| 9 | 6,97 | 130 |
| 10 | - | 137,3 |
| 11 | 2,15 | 19,1 |
| 12 | - | 129,1 |
| 13 | - | 136,1 |
| 14 | 2,11 | 15,9 |
| 15 | 8,25 | 147,4 |
| OH | 11,11 | - |

IV.2-5-Synthèse du 2,4,6-triméthyl-3-((2-méthyl-1H-imidazol-1-yl)méthyl)benzonitrile oxyde :

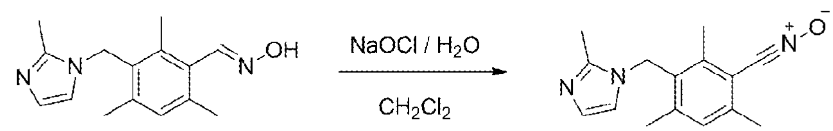


A un mélange de 2,4,6-triméthyl-3-((2-méthyl-1H-imidazol-1-yl)méthyl)benzaldéhyde oxime (8,80 g, 0,034 mol) dans $CH_2Cl_2$ (280 ml) à 6°C est ajoutée goutte à goutte une solution aqueuse de NaOCl (4 % de chlore actif, Aldrich, 49 ml) pendant 5 minutes. La température du milieu réactionnel est maintenue entre 6 et 8°C. Le milieu réactionnel est ensuite agité pendant 2 heures de 8°C à 21°C. La phase organique est séparée. La phase organique est lavée par l'eau (3 fois par 50 ml). Après concentration sous pression réduite (température du bain = 22-23°C, 220 mbar), de l'éther de pétrole (10 ml) est ajouté, le solvant est évaporé jusqu'à 8-10 ml, et la solution est maintenue à - 18°C pendant 10-15 heures de façon à obtenir un précipité. Le précipité est filtré et lavé sur le filtre par le mélange de $CH_2Cl_2$ / éther de pétrole (2 ml / 6 ml) puis par l'éther de pétrole (2 fois 10 ml) et enfin séché pendant 10-15 heures sous pression atmosphérique à température ambiante. Un solide blanc (5,31 g, rendement 61 %) de point de fusion de 139 °C est obtenu.

La pureté molaire est supérieure à 95 % mol (RMN $^1H$).

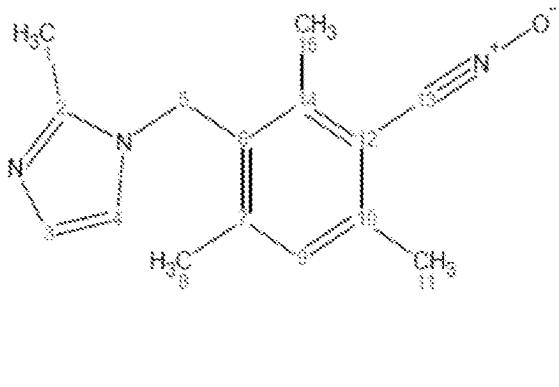

| N° | $\delta\ ^1H$ (ppm) | $\delta\ ^{13}C$ (ppm) |
|---|---|---|
| 1 | 2,3 | 12,6 |
| 2 | - | 143,6 |
| 3 | 6,59 | 126,1 |
| 4 | 6,27 | 117,1 |
| 5 | 4,99 | 43 |
| 6 | - | 130,6 |
| 7 | - | 140,7 |
| 8 | 2,16 | 19,2 |
| 9 | 7,12 | 129,9 |
| 10 | - | 141 |
| 11 | 2,34 | 20 |
| 12 | - | 112,1 |
| 13 | - | NI |
| 14 | - | 140,8 |
| 15 | 2,28 | 17,7 |

IV-3 Préparation des compositions

Dans les exemples qui suivent, les compositions caoutchouteuses ont été réalisées comme décrit au point II-6 ci-dessus. En particulier, on procède pour la fabrication de ces compositions de la manière suivante : on introduit dans un mélangeur interne (taux de remplissage final : environ 70% en volume), dont la température initiale de cuve est d'environ 80° C, l'élastomère, le cas échéant le composé 1,3-dipolaire qui est malaxé seul avec l'élastomère pendant environ 1 minute à 120° C, puis la charge ainsi que les divers autres ingrédients à l'exception du système de vulcanisation. On conduit alors un travail thermomécanique (phase non-productive) en une étape, qui dure environ 3 à 6 minutes, jusqu'à atteindre une température maximale de « tombée » de 160° C. On récupère le mélange ainsi obtenu, on le refroidit puis on incorpore le système de vulcanisation sur un mélangeur (homo-finisseur) à 23° C, en mélangeant le tout (phase productive) pendant un temps approprié (par exemple entre 5 et 12 min).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement comme produits semi-finis pour chenilles en caoutchouc.

La réticulation est effectuée à 150°C. Le temps de réticulation appliqué, $t'_c(90)$, est le temps nécessaire pour que le couple de la composition atteigne 90% du couple maximum de la composition. Les couples de la composition sont mesurés à 150°C avec un rhéomètre à chambre oscillante, selon la norme DIN 53529 - partie 3 (juin 1983). $t'_c(90)$, est déterminé selon la norme NF T 43-015 pour chacune des compositions. D'une composition à une autre, il varie environ de 20 à 40 minutes.

IV-4 Essais de compositions de caoutchouc

Les exemples présentés ci-dessous ont pour objet de comparer le compromis de performance entre la rigidité, l'allongement rupture et la résistance aux agressions mécaniques de trois compositions conformes à la présente invention (C1 et C2) avec cinq compositions témoin (T0 à T4).

Le Tableau 1 présente les compositions testées (en pce), ainsi que les résultats obtenus.

La composition témoin T0 correspond à une composition conventionnellement utilisé dans des bandes de roulement de pneumatiques de génie civil. Les compositions T1, T3 et T4 différèrent respectivement des compositions T2, C1 et C2 en ce qu'elles ne comprennent pas de composé 1,3-dipolaire conforme à l'invention. Le taux de noir de carbone entre les compositions T1 et T2, T3 et C1, et T4 et C2 on respectivement été ajustés pour rester à fraction volumique de charge constante.

[Tableau 1]

| **Composants** | **T0** | **T1** | **T2** | **T3** | **C1** | **T4** | **C2** |
|---|---|---|---|---|---|---|---|
| Caoutchouc naturel | 100 | - | - | - | - | - | - |
| EBR(1) | - | 100 | 100 | 100 | 100 | 100 | 100 |
| Composé 1,3-dipolaire(2) | - | - | 2.1 | - | 2.1 | - | 2.1 |

(suite)

| Composants | T0 | T1 | T2 | T3 | C1 | T4 | C2 |
|---|---|---|---|---|---|---|---|
| N234(3) | 40 | 40 | 41 | 52 | 53 | 65 | 67 |
| Silice(4) | 15 | - | - | - | - | - | - |
| %vol charge | 20% | 16% | 16% | 20% | 20% | 24% | 24% |
| Cire anti-ozone(5) | 1 | 1 | 1 | 1 | 1 | 1 | 1 |
| Antioxydant(6) | 1.5 | 2 | 2 | 2 | 2 | 2 | 2 |
| Acide stéarique | 1 | 1.5 | 1.5 | 1.5 | 1.5 | 1.5 | 1.5 |
| ZnO(7) | 2.5 | 2.5 | 2.5 | 2.5 | 2.5 | 2.5 | 2.5 |
| Soufre | 1.7 | 0.6 | 0.6 | 0.6 | 0.6 | 0.6 | 0.6 |
| Accélérateur (8) | 1.2 | 1.3 | 1.3 | 1.3 | 1.3 | 1.3 | 1.3 |
| **Propriétés** | | | | | | | |
| Perfo chenille | 100 | 101 | 99 | 120 | 129 | 189 | 223 |

(1) EBR: Elastomère à 74% en mole d'unité éthylène, 7,5% en mole d'unité 1,2-cyclohexanediyle, 11,5% en mole de motif 1,2, 7% en mole de motif 1,4 ; Mooney à 100°C : 68 ; Mn : 148 110 g/mol préparé selon un procédé de polymérisation d'éthylène et de butadiène conforme à l'exemple 4-2 du brevet EP 1 954 705 B1
(2) Composé 1,3-dipolaire dont la synthèse est décrite ci-dessus dans le paragraphe IV.2 (2,4,6-triméthyl-3-((2-méthyl-1H-imidazol-1-yl)méthyl)benzonitrile oxyde)
(3) Noir de carbone de grade N234selon la norme ASTM D-1765
(4) Silice « Zeosil 1165MP » de la société Solvay
(5) Cire anti-ozone « VARAZON 4959 » de la société Sasol Wax
(6) N-1,3-diméthylbutyl-N-phénylparaphénylènediamine « Santoflex 6-PPD » de la société Flexsys
(7) Oxyde de zinc de grade industriel de la société Umicore
(8) N-cyclohexyl-2-benzothiazyle sulfénamide « Santocure CBS » de la société Flexsys

Les résultats présentés dans le Tableau 1 ci-dessus montrent que la combinaison spécifique d'un composé 1,3-dipolaire conforme à l'invention avec une fraction volumique de charge élevée dans une composition à base d'un copolymère contenant des unités éthylène et des unités 1,3-diène, les unités éthylène dans le copolymère représentant plus de 50% en mole des unités monomères du copolymère permet d'améliorer la résistance aux agressions mécaniques.

Les compositions conformes à l'invention sont utiles pour de nombreuses applications dans le domaine des bandages pneumatiques ou non pneumatiques, en particulier dans des bandes de roulement pour lesquelles une forte résistances aux agressions mécaniques est désirée.

## Revendications

**1.** Composition de caoutchouc à base d'au moins :

- une matrice élastomère comprenant plus de 50 pce d'un copolymère contenant des unités éthylène et des unités 1,3-diène, les unités éthylène dans le copolymère représentant plus de 50% en mole des unités monomères du copolymère,
- un composé 1,3-dipolaire répondant à la formule (I)

**Q-Sp-B** (I)

dans laquelle :

◦ Q comprend un dipôle contenant au moins et de préférence un atome d'azote,
◦ Sp, de préférence divalent, est un atome ou un groupe d'atomes reliant Q à B,
◦ B comprend un cycle imidazole répondant à la formule (II) suivante

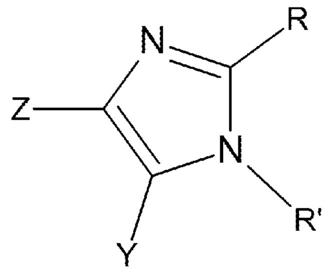

(II)

dans laquelle :

- 3 des 4 symboles Z, Y, R et R', identiques ou différents, représentent chacun un atome ou un groupe d'atomes, Z et Y pouvant former ensemble avec les atomes de carbone auxquels ils se rattachent un cycle,
- et le quatrième symbole Z, Y, R ou R' désigne un rattachement direct à Sp,

- une charge renforçante comprenant du noir de carbone, le noir de carbone représentant plus de 50% en poids de la charge renforçante, la fraction volumique de charge dans la composition de caoutchouc étant supérieure à 18%,
- un système de réticulation.

**2.** Composition selon la revendication 1, dans laquelle le copolymère contenant des unités éthylène et des unités 1,3-diène est un copolymère d'éthylène et de 1,3-diène.

**3.** Composition selon l'une quelconque des revendications précédentes, dans laquelle le 1,3-diène est le 1,3-butadiène.

**4.** Composition selon l'une quelconque des revendications précédentes, dans laquelle R' désigne un rattachement direct à Sp, Z et Y sont chacun un atome d'hydrogène et R représente un atome d'hydrogène ou un groupe carboné pouvant contenir au moins un hétéroatome et contenant de préférence de 1 à 20 atomes de carbone.

**5.** Composition selon l'une quelconque des revendications précédentes, dans laquelle Sp est un groupe contenant jusqu'à 20 atomes de carbone et pouvant contenir au moins un hétéroatome.

**6.** Composition selon l'une quelconque des revendications précédentes, dans laquelle le composé 1,3-dipolaire est choisi dans le groupe constitué par les oxydes de nitrile, les imines de nitrile et les nitrones.

**7.** Composition selon l'une quelconque des revendications précédentes, dans laquelle Q comporte, de préférence représente le motif répondant à la formule (V) :

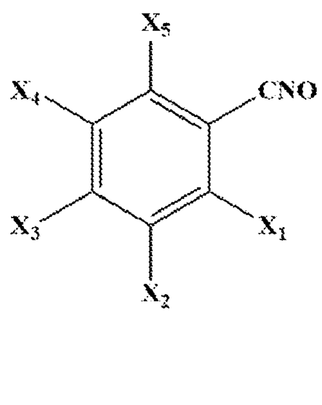

(V)

dans laquelle :
quatre des cinq symboles $X_1$ à $X_5$ identiques ou différents, sont chacun un atome ou un groupe d'atomes, préférentiellement un groupe aliphatique ou un groupe aromatique, et le cinquième symbole désigne un rattachement direct à Sp, sachant que $X_1$ et $X_5$ ne sont pas des atomes d'hydrogène.

**8.** Composition selon l'une quelconque des revendications précédentes, dans laquelle le composé 1,3-dipolaire est le

2,4,6-triméthyl-3-((2-méthyl-lH-imidazol-1-yl)méthyl)benzonitrile oxyde ou le 2,4,6-triéthyl-3-((2-méthyl-1H-imidazol-1-yl)méthyl)benzonitrile oxyde, de préférence le 2,4,6-triméthyl-3-((2-méthyl-1H-imidazol-1-yl)méthyl)benzonitrile oxyde.

**9.** Composition selon l'une quelconque des revendications précédentes, dans laquelle le taux du composé 1,3-dipolaire est compris entre 0,03 et 3 équivalents molaires, préférentiellement entre 0,05 et 2 équivalents molaires, encore plus préférentiellement entre 0,07 et 1 équivalent molaire, de cycle imidazole pour 100 moles d'unités monomères constituant le copolymère.

**10.** Composition selon l'une quelconque des revendications précédentes, dans laquelle la charge comprend 100% en poids de noir de carbone.

**11.** Composition selon l'une quelconque des revendications précédentes, dans laquelle le taux de charge est compris dans un domaine allant de 47 à 120 pce, de préférence de 49 à 110 pce, de préférence de 50 à 105 pce, de préférence encore de 55 à 85 pce.

**12.** Composition selon l'une quelconque des revendications précédentes, dans laquelle la fraction volumique de charge dans la composition de caoutchouc est supérieure à 19%, de préférence comprise dans un domaine allant de 20% à 26%, de préférence de 21% à 24%.

**13.** Composition selon l'une quelconque des revendications précédentes, dans laquelle le taux de noir de carbone est compris dans un domaine allant de 47 à 80 pce, de préférence de 49 à 80 pce, de préférence de 49 à 75 pce, de préférence de 49 à 70 pce.

**14.** Composition selon l'une quelconque des revendications précédentes, dans laquelle la fraction volumique de noir de carbone dans la composition de caoutchouc est supérieure à 18% de préférence supérieur à 19%, de préférence comprise dans un domaine allant de 20% à 26%, de préférence de 21% à 24%.

**15.** Article de caoutchouc comprenant une composition telle que définie à l'une quelconque des revendications 1 à 14, ledit article étant de préférence choisi dans le groupe constitué par bandages pneumatiques, les bandages non pneumatiques, les chenilles et les bandes transporteuses.

**Patentansprüche**

**1.** Kautschukzusammensetzung auf Basis von mindestens:

- einer Elastomermatrix, umfassend mehr als 50 phe eines Copolymers, das Ethylen-Einheiten und 1,3-Dien-Einheiten enthält, wobei die Ethylen-Einheiten in dem Copolymer mehr als 50 Mol-% der Monomereinheiten des Copolymers ausmachen,
- einer 1,3-dipolaren Verbindung, die der Formel (I) entspricht:

Q-Sp-B (I)

wobei:

◦ Q einen Dipol, der mindestens und vorzugsweise ein Stickstoffatom enthält, umfasst,
◦ Sp, das vorzugsweise zweiwertig ist, für ein Atom oder eine Gruppe von Atomen, das bzw. die Q mit B verbindet, steht,
◦ B einen Imidazolring umfasst, der der folgenden Formel (II) entspricht:

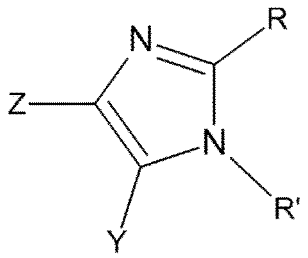

(II)

wobei:

- 3 der 4 Symbole Z, Y, R und R' gleich oder verschieden sind und jeweils für ein Atom oder eine Gruppe von Atomen stehen, wobei Z und Y zusammen mit den Kohlenstoffatomen, an die sie gebunden sind, einen Ring bilden können,
- und das vierte Symbol Z, Y, R bzw. R' eine direkte Verknüpfung mit Sp bezeichnet,

- einem verstärkenden Füllstoff, der Ruß umfasst, wobei der Ruß mehr als 50 Gew.-% des verstärkenden Füllstoffs ausmacht, wobei der Volumenanteil an Füllstoff in der Kautschukzusammensetzung mehr als 18 % beträgt;
- einem Vernetzungssystem.

**2.** Zusammensetzung nach Anspruch 1, wobei es sich bei dem Copolymer, das Ethylen-Einheiten und 1,3-Dien-Einheiten enthält, um ein Copolymer von Ethylen und 1,3-Dien handelt.

**3.** Zusammensetzung nach einem beliebigen der vorhergehenden Ansprüche, wobei es sich bei dem 1,3-Dien um 1,3-Butadien handelt.

**4.** Zusammensetzung nach einem der vorhergehenden Ansprüche, wobei R' eine direkte Verknüpfung mit Sp bezeichnet, Z und Y jeweils für ein Wasserstoffatom stehen und R für ein Wasserstoffatom oder eine auf Kohlenstoff basierende Gruppe, die mindestens ein Heteroatom enthalten kann und vorzugsweise 1 bis 20 Kohlenstoffatome enthält, steht.

**5.** Zusammensetzung nach einem der vorhergehenden Ansprüche, wobei Sp für eine Gruppe steht, die bis zu 20 Kohlenstoffatome enthält und mindestens ein Heteroatom enthalten kann.

**6.** Zusammensetzung nach einem der vorhergehenden Ansprüche, wobei die 1,3-dipolare Verbindung aus der Gruppe bestehend aus Nitriloxiden, Nitriliminen und Nitronen ausgewählt ist.

**7.** Zusammensetzung nach einem der vorhergehenden Ansprüche, wobei Q die Einheit der Formel (V) umfasst und vorzugsweise dafür steht:

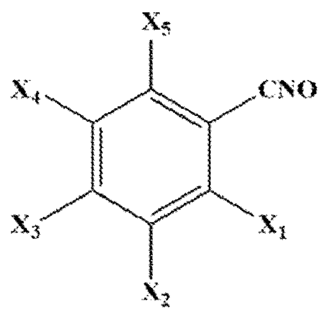

(V)

wobei:
vier der fünf Symbole $X_1$ bis $X_5$ gleich oder verschieden sind und jeweils für ein Atom oder eine Gruppe von Atomen, vorzugsweise eine aliphatische Gruppe oder eine aromatische Gruppe, stehen und das fünfte Symbol eine direkte Verknüpfung mit Sp bezeichnet, mit der Maßgabe, dass $X_1$ und $X_5$ nicht für Wasserstoffatome stehen.

8. Zusammensetzung nach einem der vorhergehenden Ansprüche, wobei es sich bei der 1,3-dipolaren Verbindung um 2,4,6-Trimethyl-3-((2-methyl-1H-imidazol-1-yl)methyl)benzonitriloxid oder 2,4,6-Triethyl-3-((2-methyl-1H-imidazol-1-yl)methyl)benzonitriloxid, vorzugsweise 2,4,6-Trimethyl-3-((2-methyl-1H-imidazol-1-yl)methyl)benzonitriloxid, handelt.

9. Zusammensetzung nach einem der vorhergehenden Ansprüche, wobei der Gehalt an 1,3-dipolarer Verbindung zwischen 0,03 und 3 Moläquivalenten, vorzugsweise zwischen 0,05 und 2 Moläquivalenten, noch weiter bevorzugt zwischen 0,07 und 1 Moläquivalent, Imidazolring auf 100 mol Monomereinheiten, aus denen das Copolymer aufgebaut ist, liegt.

10. Zusammensetzung nach einem der vorhergehenden Ansprüche, wobei der Füllstoff 100 Gew.-% Ruß umfasst.

11. Zusammensetzung nach einem der vorhergehenden Ansprüche, wobei der Gehalt an Füllstoff in einem Bereich von 47 bis 120 phe, bevorzugt 49 bis 110 phe, bevorzugt von 50 bis 105 phe, weiter bevorzugt von 55 bis 85 phe, liegt.

12. Zusammensetzung nach einem der vorhergehenden Ansprüche, wobei der Volumenanteil an Füllstoff in der Kautschukzusammensetzung mehr als 19 % beträgt und bevorzugt in einem Bereich von 20 % bis 26 %, bevorzugt von 21 % bis 24 %, liegt.

13. Zusammensetzung nach einem der vorhergehenden Ansprüche, wobei der Gehalt an Ruß in einem Bereich von 47 bis 80 phe, bevorzugt von 49 bis 80 phe, bevorzugt von 49 bis 75 phe, bevorzugt von 49 bis 70 phe, liegt.

14. Zusammensetzung nach einem der vorhergehenden Ansprüche, wobei der Volumenanteil an Ruß in der Kautschukzusammensetzung mehr als 18 % und bevorzugt mehr als 19 % beträgt und bevorzugt in einem Bereich von 20 % bis 26 %, bevorzugt von 21 % bis 24 %, liegt.

15. Kautschukgegenstand, umfassend eine Zusammensetzung gemäß einem der Ansprüche 1 bis 14, wobei der Gegenstand bevorzugt aus der Gruppe bestehend aus Luftreifen, Vollreifen, Ketten und Transportbändern ausgewählt ist.

**Claims**

1. Rubber composition based on at least:

- an elastomer matrix comprising more than 50 phr of a copolymer containing ethylene units and 1,3-diene units, the ethylene units in the copolymer representing more than 50 mol% of the monomer units of the copolymer,
- a 1,3-dipolar compound corresponding to the formula (I)

**Q-Sp-B** (I)

in which:

◦ Q comprises a dipole containing at least and preferably one nitrogen atom,
◦ Sp, which is preferably divalent, is an atom or a group of atoms connecting Q to B,
◦ B comprises an imidazole ring corresponding to the following formula (II)

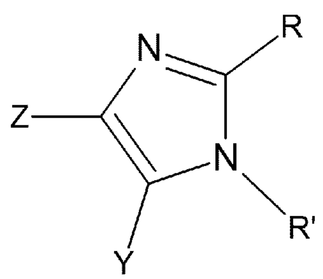

(II)

in which:

• three of the four symbols Z, Y, R and R', which are identical or different, each represent an atom or a group of atoms, it being possible for Z and Y to form, together with the carbon atoms to which they are attached, a ring,
• and the fourth symbol Z, Y, R or R' denotes a direct attachment to Sp,

- a reinforcing filler comprising carbon black, the carbon black representing more than 50% by weight of the reinforcing filler, the fraction by volume of filler in the rubber composition being greater than 18%,
- a crosslinking system.

2. Composition according to Claim 1, wherein the copolymer containing ethylene units and 1,3-diene units is a copolymer of ethylene and of 1,3-diene.

3. Composition according to either one of the preceding claims, wherein the 1,3-diene is 1,3-butadiene.

4. Composition according to any one of the preceding claims, wherein R' denotes a direct attachment to Sp, Z and Y are each a hydrogen atom and R represents a hydrogen atom or a carbon-based group which can contain at least one heteroatom and preferably containing from 1 to 20 carbon atoms.

5. Composition according to any one of the preceding claims, wherein Sp is a group containing up to 20 carbon atoms and which can contain at least one heteroatom.

6. Composition according to any one of the preceding claims, wherein the 1,3-dipolar compound is selected from the group consisting of nitrile oxides, nitrilimines and nitrones.

7. Composition according to any one of the preceding claims, wherein Q comprises, preferably represents, the unit corresponding to the formula (V):

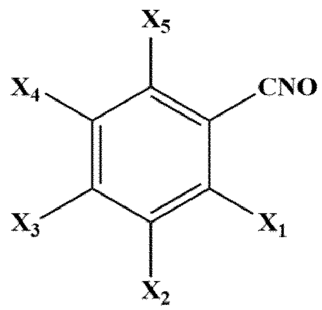

(V)

in which:
four of the five symbols $X_1$ to $X_5$, which are identical or different, are each an atom or a group of atoms, preferentially an aliphatic group or an aromatic group, and the fifth symbol denotes a direct attachment to Sp, it being known that $X_1$ and $X_5$ are not hydrogen atoms.

8. Composition according to any one of the preceding claims, wherein the 1,3-dipolar compound is 2,4,6-trimethyl-3-((2-methyl-1H-imidazol-1-yl)methyl)benzonitrile oxide or 2,4,6-triethyl-3-((2-methyl-1H-imidazol-1-yl)methyl)benzonitrile oxide, preferably 2,4,6-trimethyl-3-((2-methyl-lH-imidazol-1-yl)methyl)benzonitrile oxide.

9. Composition according to any one of the preceding claims, wherein the content of the 1,3-dipolar compound is of between 0.03 and 3 molar equivalents, preferentially between 0.05 and 2 molar equivalents, more preferentially still between 0.07 and 1 molar equivalent, of imidazole ring per 100 mol of monomer units constituting the copolymer.

10. Composition according to any one of the preceding claims, wherein the filler comprises 100% by weight of carbon black.

11. Composition according to any one of the preceding claims, wherein the content of filler is within a range extending from 47 to 120 phr, preferably from 49 to 110 phr, preferably from 50 to 105 phr, more preferably from 55 to 85 phr.

**12.** Composition according to any one of the preceding claims, wherein the fraction by volume of filler in the rubber composition is greater than 19%, preferably within a range extending from 20% to 26%, preferably from 21% to 24%.

**13.** Composition according to any one of the preceding claims, wherein the content of carbon black is within a range extending from 47 to 80 phr, preferably from 49 to 80 phr, preferably from 49 to 75 phr, preferably from 49 to 70 phr.

**14.** Composition according to any one of the preceding claims, wherein the fraction by volume of carbon black in the rubber composition is greater than 18%, preferably greater than 19%, preferably within a range extending from 20% to 26%, preferably from 21% to 24%.

**15.** Rubber article comprising a composition as defined in any one of Claims 1 to 14, said article preferably being selected from the group consisting of pneumatic tyres, non-pneumatic tyres, caterpillar tracks and conveyor belts.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 1092731 A
- WO 2004035639 A
- WO 2007054223 A
- WO 2007054224 A
- WO 2017093654 A1
- WO 2018020122 A1
- WO 2018020123 A1
- WO 9736724 A
- WO 9916600 A
- WO 0210269 A
- EP 0501227 A
- EP 0735088 A
- EP 0810258 A
- WO 0005300 A
- WO 0005301 A
- EP 1954705 B1


### Littérature non-brevet citée dans la description


- **LLAURO M. F.** ; **MONNET C.** ; **BARBOTIN F.** ; **MONTEIL V.** ; **SPITZ R.** ; **BOISSON C.** Investigation of ethylene/butadiene copolymers microstructure by H and C NMR. *Macromolecules*, 2001, vol. 34, 6304-6311
- **E ZENKEVICH, I. G.** ; **MAKAROV, A. A.** *Russian Journal of General Chemistry*, 2007, vol. 77 (4), 611-619
- *Zhurnal Obshchei Khimii*, 2007, vol. 77 (4), 653-662
- **YAKUBOV, A. P.** ; **TSYGANOV, D. V.** ; **BELEN'KII, L. I.** ; **KRAYUSHKIN, M. M.** *Bulletin of the Academy of Sciences of the USSR, Division of Chemical Science (English Translation)*, 1991, vol. 40 (7.2), 1427-1432
- *Izvestiya Akademii Nauk SSSR, Seriya Khimicheskaya*, 1991 (7), 1609-1615